Europäisches Patentamt

European Patent Office

Office européen des brevets

(19)

(11) Veröffentlichungsnummer: **0 157 422**
**B1**

(12) **EUROPÄISCHE PATENTSCHRIFT**

(45) Veröffentlichungstag der Patentschrift: **28.11.90**

(51) Int. Cl.⁵: **B 27 D 1/00**

(21) Anmeldenummer: **85104046.9**

(22) Anmeldetag: **03.04.85**

(54) Fertigfurnier-Blattmaterial.

(30) Priorität: **06.04.84 DE 3413014**

(43) Veröffentlichungstag der Anmeldung:
**09.10.85 Patentblatt 85/41**

(45) Bekanntmachung des Hinweises auf die
Patenterteilung:
**28.11.90 Patentblatt 90/48**

(84) Benannte Vertragsstaaten:
**AT BE CH DE FR GB IT LI NL SE**

(56) Entgegenhaltungen:
**EP-A-0 094 651**
**DE-A-1 931 024**
**DE-A-2 019 770**
**DE-A-2 116 418**
**DE-A-2 335 859**
**DE-A-2 405 376**
**DE-A-2 507 854**
**DE-A-2 532 319**
**US-A-3 385 743**

(73) Patentinhaber: **RuStiMa Türen und Innenausbau GmbH**
**Hauptstrasse 25**
**D-6251 Waldbrunn-Lahr (DE)**

(72) Erfinder: **Rindfleisch, Werner Erich**
**Hauptstrasse 25**
**D-6251 Waldbrunn (DE)**
Erfinder: **Rindfleisch, Stefan Wolfgang**
**Hauptstrasse 25**
**D-6251 Waldbrunn (DE)**

(74) Vertreter: **Simon, Peter, Dr.-Jur. et al**
**Offheimer Weg 64**
**D-6250 Limburg/Lahn (DE)**

EP 0 157 422 B1

Courier Press, Leamington Spa, England.

**Beschreibung**

Die Erfindung bezieht sich auf ein Fertigfurnier-Blattmaterial zum Aufkleben auf Türen, Möbeln oder Wänden. Die Erfindung bezieht sich auch auf ein Verfahren zur Herstellung des Furnier-Blattmaterials und auf seine Verwendung.

Es ist bekannt, bedruckte Kunststoffolien mit dem Aussehen eines Holzfurniers einseitig mit ständig klebrigem Klebstoff zu versehen und diese Klebstoffschicht mit einer Deck- oder Abziehfolie zu schützen, so daß man ein transportfähiges Blattmaterial erhält, welches in Läden vertrieben werden kann. Der Benutzer zieht die Deckfolie ab und kann dann die bedruckte Kunststoffolie unmittelbar auf Türen, Möbel oder Wände kleben, ohne daß er hierzu einer Presse bedarf.

Es ist auch schon der Versuch unternommen worden, die bedruckte Kunststoffolie durch ein Furnier, d.h. eine dünne Holzschicht, zu ersetzen (US-A-3 385 743). Dabei wird das Furnier auf Kraftpapier aufgeklebt, das beidseitig mit Polyethylen beschichtet ist, und auf der freien Seite des Kraftpapiers wird der dauernd klebrige Klebstoff aufgebracht und durch die Deck- oder Abziehfolie geschützt. Dieses Produkt ist für einen Letztverbraucher letztlich unbrauchbar. Der Grund hierfür liegt darin, daß Furnier als Holzwerkstoff sich durch Umgebungseinflüsse verändert ("arbeitet") und insbesondere durch Feuchtigkeit wellig wird. Um größere Flächen einwandfrei zu beschichten, muß man deshalb eine Presse anwenden. Aus diesem Grund gibt es kein Fertigfurnier-Blattmaterial am Markt, welches sich in der einfachen Weise verarbeiten läßt, wie dies bei bedruckten Kunststoffolien der Fall ist.

Mit der Erfindung soll ein Fertigfurnier-Blattmaterial als neues Produkt geschaffen werden, das ohne die Anwendung einer Maschinenpresse großflächig auf Gegenständen, wie Türen, Möbeln oder Wänden, aufgeklebt werden kann.

Das Fertigfurnier-Blattmaterial soll dabei auch Intarsienarbeiten zeigen können oder für die Weiterverarbeitung zu Intarsienarbeiten durch Schreiner. aber auch Do-It-Yourself-Leute geeignet sein.

Das Fertigfurnier-Blattmaterial zum Aufkleben auf Türen, Möbeln oder Wänden gemäß Erfindung enthält wenigstens einen ersten und einen zweiten Schichtenaufbau sowie einen Träger. Der erste Schichtenaufbau enthält eine Furnierschicht mit einer Oberseite und einer Unterseite. Der zweite Schichtenaufbau enthält eine Verbindungsschicht, welche in der Lage ist, die Furnierschicht zusammenzuhalten und mit dem Träger lösbar zu verbinden. Der Träger ist so biegesteif ausgebildet. daß er in der Lage ist, die Furnierschicht samt Verbindungsschicht gegen unerwünschte Verformung (Verziehen infolge Feuchtigkeitsaufnahme) zu stabilisieren. Zum Gebrauch des Fertigfurniers wird die Furnierschicht von dem Träger abgelöst, wobei man sich einer Klinge mit abgerundeter Schneide bedienen kann. Die abgelöste Furnierschicht wird durch die Verbindungsschicht oder Teile dieser Verbindungsschicht zusammengehalten, auch wenn die Furnierschicht aus einzelnen Furnierstücken besteht, die etwa nach Art einer Intarsie zusammengesetzt sind. Die so auf ihrer Unterseite durch die Verbindungsschicht zusammengehaltene Furnierschicht wird baldmöglichst auf den gewünschten Gegenstand aufgeklebt, bevor durch Umwelteinfluß, insbesondere Feuchtigkeitsaufnahme, die Furnierschicht uneben wird.

Als besonders vorteilhaft hat es sich erwiesen, wenn der zweite Schichtenaufbau eine erste Leimschicht, eine Papierschicht mit einer ersten und zweiten Oberfläche und eine zweite Leimschicht enthält. Die erste Leimschicht verbindet die Unterseite der Furnierschicht mit der ersten Oberfläche der Papierschicht und entwickelt dabei eine erste Verbindungskraft. Die zweite Leimschicht verbindet die zweite Oberfläche der Papierschicht mit dem Träger und entwickelt dabei eine zweite Verbindungskraft. Die Papierschicht enthält Fasern, die untereinander eine dritte Verbindungskraft aufweisen. Die Materialien sind so gewählt, daß die dritte Verbindungskraft kleiner als die erste Verbindungskraft und auch kleiner als die zweite Verbindungskraft ist. Wenn man demnach mit der Trennklinge die Furnierschicht von dem Träger ablöst, wird die Papierschicht gespalten, und ein Teil der Papierfasern haftet auf der Unterseite der Furnierschicht, während der andere Teil der Papierfasern am Träger haften bleibt.

Die Oberseite der Furnierschicht kann eine Lackschicht tragen, wie dies bei üblichen Furnierflächen der Fall ist. Es versteht sich, daß das Furnier zuvor geschliffen, gegebenenfalls gebeizt (mit einer Farblösung behandelt) und grundiert worden ist.

Das Fertigfurnier-Blattmaterial kann auch in der Weise ausgebildet sein, daß es sich zur Weiterverarbeitung für Intarsienarbeiten eignet. Zu diesem Zweck ist ein dritter und ein vierter Schichtenaufbau vorgesehen, die auf dem ersten Schichtenaufbau angeordnet sind. Der dritte Schichtenaufbau enthält eine zweite Furnierschicht mit einer Oberseite und einer Unterseite. Der vierte Schichtenaufbau enthält eine zweite Verbindungsschicht, welche in der Lage ist, die zweite Furnierschicht zusammenzuhalten und mit dem ersten Schichtenaufbaulösbar zu verbinden. Wenn man demnach die zweite Furnierschicht längs einer geschlossenen Linie mit einem Messer quer durchtrennt, läßt sich das durchtrennte Furnierstück mit einer stumpfen Klinge aus dem Verbund mit dem dritten Schichtenaufbau ablösen und kann durch einentsprechend geformtes Furnierstück ersetzt werden, welches in die geschaffene Lücke eingeklebt wird. Auf diese Weise kann auch der interessierte Do-It-Yourself-Mann Intarsienarbeiten ausführen.

Die Zeichnungen zeigen:

Fig. 1 ist eine schematische Darstellung des Aufklebens des Fertigfurnier-Blattmaterials auf einer Tür.

Fig. 2 zeigt einen vergrößerten Querschnitt des Fertigfurnier-Blattmaterials auf einer Holzfaserplatte als Träger.

Fig. 3 zeigt den Vorgang der Ablösung des Fertigfurnier-Blattmaterials von dem Träger.

Fig. 4 zeigt ein zweites Ausführungsbeispiel des Fertigfurnier-Blattmaterials für Intarsienarbeiten in einem schematischen vergrößerten Querschnitt.

Fig. 5 zeigt eine vergrößerte schematische perspektivische Darstellung des Vorgehens bei der Intarsienarbeit.

Beschreibung bevorzugter Ausführungsformen:

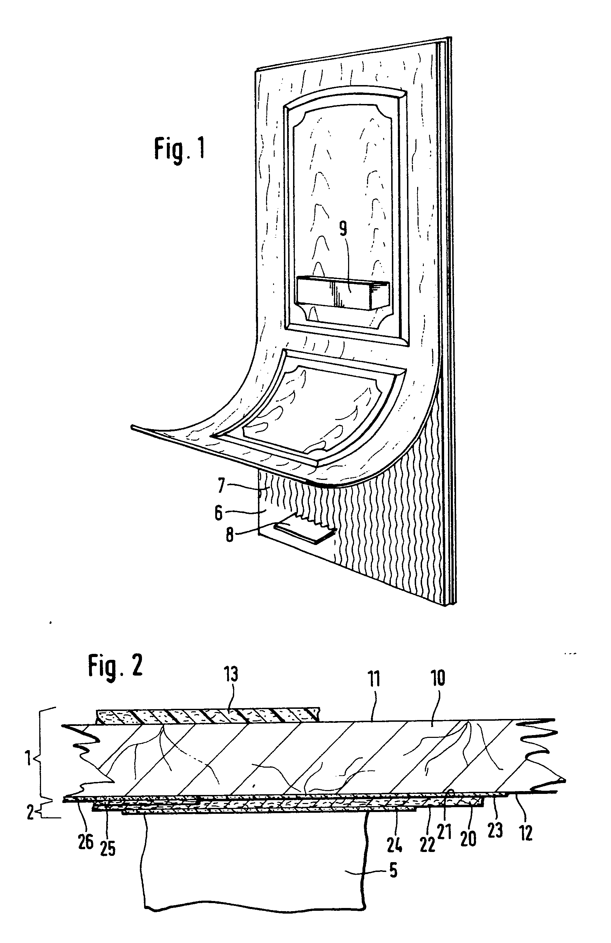

Fig. 1 zeigt, wie das Fertigfurnier-Blattmaterial, welches einen ersten Schichtenaufbau 1 und einen zweiten Schichtenaufbau 2 enthält, auf eine Tür 6 aufgeklebt wird. Auf der Oberfläche der Tür 6 ist Klebstoff 7 etwa mit einer Rakel 8 aufgetragen worden. und das Fertigfurnier-Blattmaterial mit dem ersten und zweiten Schichtenaufbau 1, 2 wird mit einem Holzstück 9 angepreßt. Wie ersichtlich, kann das Fertigfurnier-Blattmaterial aus unterschiedlichen Holzarten bestehen, die in der Art einer Intarsienarbeit zusammengesetzt sind.

Fig. 2 zeigt einen vergrößerten Querschnitt des Fertigfurnier-Blattmaterials. Dieses enthält den ersten Schichtenaufbau 1 und den zweiten Schichtenaufbau 2, die auf einem Träger 5 aufgeklebt sind. Bei dem Träger 5 kann es sich um eine Spanplatte von 3 bis 4 mm Dicke handeln, es ist aber auch möglich, eine ausreichend steife Aluminiumfolie bzw. -platte zu verwenden. Bei dem Träger 5 kommt es darauf an, daß er so biegesteif ausgebildet ist, daß er in der Lage ist, die Furnierschicht 1 samt Verbindungsschicht 2 gegen unerwünschte Verformung zu stabilisieren. Da Furnier aus Holz besteht, hat es die Tendenz, sich zu verwerfen oder zu verziehen, insbesondere bei Einwirkung von Feuchtigkeit. Dies wird durch den festen Verbund des Schichtenaufbaus 1, 2 mit dem Träger 5 verhindert.

Der erste Schichtenaufbau 1 enthält eine Furnierschicht 10, die eine Dicke von 0.3 bis 1,5 mm haben kann. Die Furnierschicht 10 muß nicht aus einem einheitlichen Holz bestehen; es ist auch möglich, daß sie aus unterschiedlichen Holzarten zusammengesetzt ist. Die Furnierschicht 10 kann auch gebeizt (eingefärbt) und mit Imprägnierungsmitteln behandelt sein. Die Furnierschicht weist eine Oberseite 11 und eine Unterseite 12 auf. Die Oberseite 11 ist normalerweise geschliffen und mit einer Lackschicht 13 bedeckt.

Der zweite Schichtenaufbau 2 enthält eine Papierschicht 20 mit einer ersten Oberfläche 21 und einer zweiten Oberfläche 22. Die erste Oberfläche 21 ist mittels einer Leimschicht 23 auf der Unterseite 12 der Furnierschicht 10 aufgeklebt, wobei eine erste Verbindungskraft entwickelt wird. Die zweite Oberfläche 22 der Papierschicht 20 ist mittels einer zweiten Leimschicht 24 auf den Träger 5 geklebt, wobei eine zweite Verbindungskraft entwickelt wird. Die Papierschicht 20 enthält Fasern, die den Zusammenhalt der Papierschicht 20 gewährleisten und eine dritte Verbindungskraft darstellen. Die von der ersten Leimschicht 23 entwickelte Verbindungskraft ist jedenfalls höher als die dritte Verbindungskraft. Auch die zweite Verbindungskraft kann höher sein als die dritte Verbindungskraft. Diese Voraussetzungen sind gegeben, wenn man für die Leimschichten 23, 24 einen Weißleim der Firma Levonal GmbH mit der Bezeichnung "levonal 150/UR" wählt.

Zur Herstellung des Fertigfurnier-Blattmaterials wird die Papierschicht 20 unter Zwischenfügung der Leimschicht 24 und die Furnierschicht 10 unter Zwischenfügung der Leimschicht 23 aufeinander gestapelt und in eine beheizte Presse eingelegt und verpreßt. Die Temperatur der Presse kann 60°C betragen um zu einem rascheren Abbinden des Weißleimes zu gelangen.

Der zweite Schichtenaufbau 2 kann außer der Papierschicht 20 noch eine zweite Papierschicht 25 enthalten, die vorzugsweise mit einem Melaminharz getränkt ist und auf die Unterseite 12 der Furnierschicht 10 mittels einer Kleberschicht 26 befestigt ist. Die Tränkung mit Melaminharz stellt einen Schutz gegen einwirkende Feuchtigkeit dar. Das so aufgebaute Fertigfurnier-Blattmaterial hat deshalb weniger Tendenz der Verwerfung bzw. des Verziehens.

Wenn die Furnierschicht 10 in der beschriebenen Weise fest mit der Unterlage 3 verbunden ist. wird die Außenseite 11 gewöhnlich geschliffen und gegebenenfalls auch gebeizt (mit einer Farblösung behandelt). Als Finish kann man auch die Lackschicht 13 auftragen.

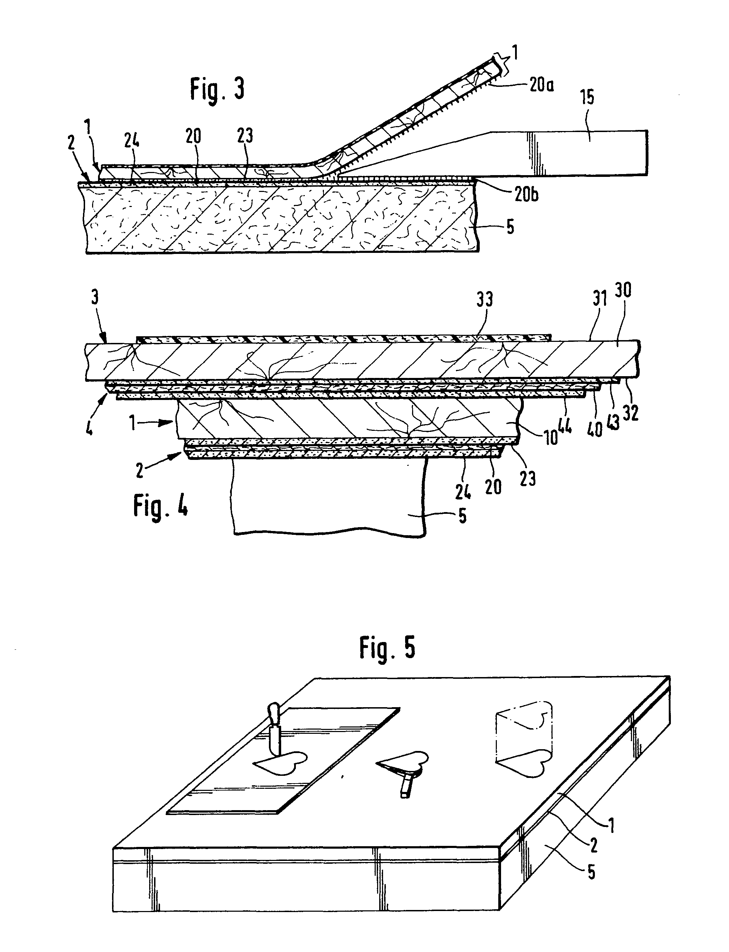

Das mit Fig. 2 beschriebene Produkt ist lagerfähig und kann gehandelt sowie an den Ort des Gebrauchs transportiert werden. Dort wird das Fertigfurnier-Blattmaterial vom Träger 5 abgenommen, was anhand der Fig. 3 beschrieben wird.

Zum Abtrennen ist eine stumpfe Klinge 15 vorgesehen, die einen keilförmigen Querschnitt aufweist und an der Keilkante mit etwa 1 mm abgerundet ist. Die Klinge 15 wird in die Papierschicht 20 hineingetrieben. so daß diese aufgespalten wird. Dies erfolgt deshalb, weil die Verbindungskräfte der Leimschichten 23 und 24 größer sind als die Verbindungskraft der Papierfasern untereinander, wie zuvor beschrieben. Ein Teil der Fasern verbleibt demnach als Faservlies 20a an der Unterseite 12 der Furnierschicht, und der andere Teil der Papierfasern bleibt als Faservlies 20b an der Unterlage 3 haften. Das Faservlies 20a zusammen mit der Leimschicht 23 ist aber fest genug, die Furnierschicht 10 zusammenzuhalten, auch dann, wenn diese aus einzelnen Furnierstücken besteht. Der Zusammenhalt wird durch das mit Melaninharz getränkte Papier 25 verstärkt, welches man deshalb dann bevorzugt anwendet, wenn die Furnierschicht 10 aus fein zusammengesetzten Intarsien besteht.

Fig. 4 zeigt einen Querschnitt durch ein Fertigfurnier-Blattmaterial, welches sich insbesondere zur Ausführung von Intarsienarbeiten eignet. Auf den bereits beschriebenen Schichtenaufbau 1, 2 wird ein dritter und vierter Schichtaufbau 3, 4 aufgebracht. Im Schichtenaufbau 1 ist die Furnierschicht 10 ein einfaches Blindfurnier, während im Schichtenaufbau 3 eine wertvolle Furnierschicht 30 angewendet wird. Diese Furnierschicht 30 kann aus einzelnen Furnierstücken in der Art einer Intarsie zusammengesetzt sein. Die Oberseite 31 der Furnierschicht 30 ist mit einer Lackschicht 33 versehen und an der Unterseite 32 grenzt der Schichtenaufbau 4 an, der wiederum aus einer Leimschicht 43, einer Papierschicht 40 und einer weiteren Leimschicht 44 besteht. Es kann auch eine mit Melaminharz getränkte Papierschicht eingezogen sein, wie dies bei Fig. 2 erläutert wurde. Der Schichtenaufbau 4 entspricht somit im wesentlichen dem Schichtenaufbau 2, und der Schichtenaufbau 3 entspricht dem Schichtenaufbau 1. Die Herstellung der in Fig. 4 dargestellten Struktur erfolgt analog zur Herstellung der Struktur nach Fig. 2 und muß deshalb nicht im einzelnen erläutert werden.

Fig. 5 zeigt, wie man bei einer Einlegearbeit vorgeht. Auf Fertigfurnier-Blattmaterial, welches auf der Unterlage 5 festgespannt ist, wird ein Rohfurnierblatt gelegt, auf welchem ein Linienmuster aufgezeichnet ist. Mit einem scharfen Messer fährt man diesem Muster entlang und durchtrennt sowohl das Rohfurnier als auch die darunter liegende Furnierschicht 10, wodurch ein Furnierstück ausgeschnitten wird. Dieses kann nunmehr mit einer Klinge aus dem Verbund mit der darunter liegenden Papierschicht 20 gelöst werden, ähnlich wie dies im Zusammenhang mit Fig. 3 beschrieben wurde. Das ausgeschnittene Stück der Rohfurnierschicht wird in die entstandene Lücke eingesetzt und eingeklebt.

Als Papier in dem Schichtenaufbau 2 oder 4 hat sich solches der Spezifikation "Natron Kraftpack 80 g" bewährt.

## Patentansprüche

1. Fertigfurnier-Blattmaterial zum Aufkleben auf Türen, Möbel und Wände mit folgenden Merkmalen:

es enthält wenigstens einen ersten (1) und einen zweiten (2) Schichtenaufbau, die auf einem Träger (5) aufgeklebt sind;

der erste Schichtenaufbau (1) enthält eine Furnierschicht (10) mit einer Oberseite (11) und einer Unterseite (12); der zweite Schichtenaufbau (2) enthält eine erste Klebstoffschicht (23), eine Papierschicht (20) mit einer ersten und einer zweiten Oberfläche und eine zweite Klebstoffschicht (24) und bildet eine Verbindungsschicht (20, 23), welche in der Lage ist, die Furnierschicht (10) zusammenzuhalten und mit dem Träger (5) lösbar zu verbinden;

die erste Klebstoffschicht (23) verbindet die Unterseite (12) der Furnierschicht (10) mit der ersten Oberfläche (21) der Papierschicht (20) und entwickelt dabei eine erste Verbindungskraft;

die zweite Klebstoffschicht (24) verbindet die zweite Oberfläche (22) der Papierschicht (20) mit dem Träger (5) und entwickelt dabei eine zweite Verbindungskraft;

die Papierschicht (20) enthält Fasern;

die Fasern zeigen eine dritte Verbindungskraft untereinander;

gekennzeichnet durch folgende Merkmale:

die dritte Verbindungskraft ist kleiner als die erste Verbindungskraft und kleiner als die zweite Verbindungskraft;

der Träger (5) ist so biegesteif ausgebildet, daß er in der Lage ist, die Furnierschicht (10) samt Verbindungsschicht (20, 23) gegen unerwünschte Verformung zu stabilisieren.

2. Fertigfurnier-Blattmaterial nach Anspruch 1, dadurch gekennzeichnet, daß die erste und zweite Klebstoffschicht (23, 24) aus Leim ausgebildet sind.

3. Fertigfurnier-Blattmaterial nach Anspruch 1 oder 2, dadurch gekennzeichnet, daß die Furnierschicht (10) an ihrer Oberseite (11) eine Lackschicht (13) trägt.

4. Fertigfurnier-Blattmaterial nach Anspruch 1 oder 2, gekennzeichnet durch folgende Merkmale:

ein dritter (3) und ein vierter (4) Schichtenaufbau sind auf dem ersten Schichtenaufbau (1) angeordnet;

der dritte Schichtenaufbau (3) enthält eine zweite Furnierschicht (30) mit einer Oberseite (31) und einer Unterseite (32);

der vierte Schichtenaufbau (4) enthält eine zweite Verbindungsschicht (40, 43), welche in der Lage ist, die zweite Furnierschicht (30) zusammenzuhalten und mit dem ersten Schichtenaufbau (1) lösbar zu verbinden.

5. Fertigfurnier-Blattmaterial nach einem der Ansprüche 1 bis 4, dadurch gekennzeichnet, daß die zweite Schicht (2) eine mit Melamin getränkte Papierschicht (25) enthält.

6. Fertigfurnier-Blattmaterial nach einem der Ansprüche 1 bis 5, dadurch gekennzeichnet, daß die obere Furnierschicht (10, 30) aus einzelnen Furnierstücken besteht, die nach Art einer Intarsie aneinandergefügt sind.

7. Verfahren zur Herstellung von Fertigfurnier-Blattmaterial, gekennzeichnet durch folgende Merkmale:

auf einem biegesteifen Träger (5) mit ebener Oberfläche wird eine Leimschicht (24) aufgetragen, auf diese eine Papierschicht (20) flach aufgelegt und auf diese wiederum eine Leimschicht (23) aufgetragen — erste Verbindungsschicht -, Furnier (10) wird auf die Leimschicht flach aufgelegt;

die gleichen Verfahrensschritte werden gegebenenfalls mit einer zweiten Verbindungsschicht (40, 43, 44) und einer zweiten Furnierschicht (30) durchgeführt;

dabei wird der Leim so gewählt daß die Verbindungskraft zwischen Träger und Papierschicht einerseits und zwischen Furnier und Papierschicht andererseits größer ist als die Verbindungskraft der Fasern untereinander in der Papierschicht;

der Träger (5) mit der oder den aufgeleimten Papierschichten (20, 40) und der oder den Furnierschichten (10, 20) wird in einer Presse, gegebenenfalls unter Einwirkung von Wärme, unter Druck gehalten, bis der Leim fest ist;

die Oberseite (11 bzw. 31) der Furnierschicht (10 bzw. 30) wird geschliffen sowie gegebenenfalls gebeizt und/oder lackiert.

8. Verwendung des Fertigfurnier-Blattmaterials nach einem der Ansprüche 1 bis 6 zur Beschichtung von Türen, Möbeln oder Wänden durch Aufspalten der Papierschicht (20) mit einem keilartigen Werkzeug (15) und Andrücken der das Furnier (10) tragenden, abgespaltenen Papierschicht (20a) an ein auf dem Objekt (6) angebrachtes, feuchtes Leimbett (7).

9. Verwendung des Fertigfurnier-Blattmaterials nach Anspruch 4 zur Herstellung einer Intarsienarbeit auf der zweiten Furnierschicht (30) und zur Beschichtung von Türen (6), Möbeln oder Wänden durch folgende Maßnahmen:

ein Furnierstück wird aus der zweiten Furnierschicht (3) ausgeschnitten und herausgelöst;

in die entstandene Lücke wird ein anderes Furnierstück der gleichen Umrißform eingesetzt und festgeleimt;

in der gleichen Weise wird fortgefahren, bis die vorgesehene Intarsienarbeit beendet ist;

die freie Oberfläche der zweiten Furnierschicht (30) wird nunmehr geschliffen;

Aufspalten der ersten Papierschicht (20) mit einem keilartigen Werkzeug (15) und Andrücken der das erste Furnier (10) tragenden, abgespaltenen Papierschicht (20a) an ein auf dem Objekt (6) angebrachtes, feuchtes Leimbett (7).

**Revendications**

1. Matériau de placage en feuille préfabriquée pouvant être collé sur portes, meubles et murs et présentant les particularités suivantes:

Il contient au moins une première (1) et une deuxième (2) strate collées sur un support (5); la première strate (1) contient une feuille de bois de placage (10) présentant une face supérieure (11) et une face inférieure (12); la deuxième strate (2) contient une première couche de colle (23), une feuille de papier (20) avec une première et une seconde surface, et une seconde couche de colle (24) et forme une couche de liaison (20, 23) capable d'assurer la tenue mécanique de la feuille de bois de placage (10) et de le relier sans caractère définitif au support (5); la première couche de colle (23) relie la face inférieure (12) de la feuille de bois de placage (10) avec la première surface (21) de la feuille de papier (20) et crée ainsi la première force de liaison;

La deuxième couche de colle (24) relie la seconde surface (22) de la feuille de papier (20) au support (5) et crée ainsi la deuxième force de liaison;

La feuille de papier (20) contient des fibres;

Les fibres présentent une troisième force les liant entre elles; caractérisé en ce que:

la troisième force de liaison est inférieure à la première force de liaison et inférieure à la deuxième force de liaison; le support (5) est conçu avec une rigidité telle qu'il soit capable de protéger mécaniquement la feuille de bois de placage (10) plus la couche de liaison (20, 23) contre toute déformation indésirable.

2. Matériau de placage en feuille préfabriquée selon revendication 1, caractérisé en ce que la première et la seconde couche (23, 24) sont composées de colle.

3. Matériau de placage en feuille préfabriquée selon la revendication 1 ou 2, caractérisé en ce que la couche de bois de placage (10) supporte en sa face supérieure (11) une couche de laque (13).

4. Matériau de placage en feuille préfabriquée selon la revendication 1 ou 2, caractérisé en ce qu'une troisième (3) et une quatrième (4) strates sont superposées sur la première strate (1);

La troisième strate (3) contient une seconde feuille de bois de placage (30) présentant une face supérieure (31) et inférieure (32);

La quatrième strate (4) contient une seconde couche de liaison (40, 43) assurant la tenue mécanique de la seconde feuille de bois de placage (30) et la reliant sans caractère définitif à la première strate (1).

5. Matériau de placage en feuille préfabriquée selon l'une des revendications 1 à 4, caractérisé en ce que la seconde strate (2) contient une feuille de papier (25) imbibée de résine de mélamine.

6. Matériau de placage en feuille préfabriquée selon l'une des revendications 1 à 5, caractérisé en ce que la feuille supérieure de bois de placage (10, 30) se compose de pièces de bois individuelles juxtaposées les unes aux autres pour former un ouvrage de marqueterie.

7. Procédé de fabrication de matériau de placage en feuille préfabriquée, caractérisé en ce qui suit:

On applique une couche de colle (24) sur un support rigide (5) de surface plane, puis on pose à plat une feuille de papier (20) sur celle-ci (24) puis une seconde couche de colle (23) sur celle-ci (20), formant ainsi la première couche de liaison, la feuille de bois de placage (10) étant déposée à plat sur la couche de colle; ces étapes de la procédure se répètent identiques pour confectionner le cas échéant la seconde couche de liaison (40, 43, 44) d'une seconde feuille de bois de placage (30); on choisit la colle de telle sorte que la force de liaison s'exerçant entre le support et la feuille de papier d'une part et entre le bois de placage et la feuille de papier d'autre part soit supérieure à la force reliant entre elles les fibres constitutives de la feuille de papier; le support (5) avec la ou les couches de papier encollées (20, 40) et la ou les feuilles de bois de placage (10, 30) sont maintenus comprimés dans une presse, le cas échéant avec apport de chaleur, jusqu'à ce que la colle ait durci;

Le face supérieure (11 et 31) de la feuille de bois de placage (10 et 30) est poncée ainsi que, le cas échéant, teintée et/ou laquée.

8. Utilisation du matériau de placage en feuille préfabriquée selon l'une des revendications 1 à 6, pour revêtir des portes, meubles ou murs, la feuille de papier étant fendue (20) avec un outil anguleux (15) et la feuille de papier fendue (20a) supportant la feuille de bois de placage (10) étant appliquée sur un lit de colle humide (7) enduit sur l'objet (6) à revêtir.

9. Utilisation du matériau de placage en feuille préfabriquée selon la revendication 4, pour confectionner un ouvrage de marqueterie sur la seconde feuille de bois de placage (30) et pour revêtir les portes (6), meubles ou murs par les opérations suivantes:

Une pièce de bois de placage est découpée dans la seconde feuille de bois de placage (3) puis détachée de celle-ci;

Dans le vide ainsi créé, on introduit une autre pièce de bois de placage épousant exactement les formes du vide et l'on colle cette pièce;

On répète l'opération jusqu'à ce que l'ouvrage de marqueterie soit terminé;

On ponce ensuite la surface nue de la seconde feuille de bois de placage (30);

On fend la première couche de papier (20) avec un outil anguleux (15) puis on applique la feuille de papier fendue (20a), supportant la feuille de bois de placage (10), sur un lit de colle humide (7) enduit sur l'objet (6) à revêtir.

**Claims**

1. Ready-for-use veneer sheet material for bonding to doors, furniture and walls with the following characteristics: it contains at least a first layer structure (1) and a second layer structure (2), which are bonded to a carrier (5); the first layer structure (1) contains a layer of veneer (10) with a top side (11) and an underside (12); the second layer structure (2) contains a first layer of adhesive (23), a layer of paper (20) with a first surface and a second surface and a second layer of adhesive (24) and forms a bonding layer (20, 23) which is capable of holding the layer veneer (10) together and of bonding it with the carrier (5) in such a manner that it can be separated from the carrier (5); the first layer of adhesive (23) bonds the underside (12) of the layer of veneer (10) with the first surface (21) of the layer of paper (20) thereby developing an initial bonding force; the second layer of adhesive (24) bonds the second surface (22) of the layer of paper (20) with the carrier (5) and thereby developing a second bonding force; the layer of paper (20) contains fibers:

the fibers display a third mutual bonding force; characterized by the following characteristics:

the third bonding force is smaller than the first bonding force and smaller than the second bonding force; the carrier (5) is stiff enough to stabilze the layer of veneer (10) together with the bonding layer (20, 23) against undesirable deformation.

2. Ready-for-use veneer sheet material in accordance with claim 1, characterized in that, the first layer of adhesive and the second layer of adhesive (23, 24) consist of glue.

3. Ready for use veneer sheet material in accordance with claim 1 or claim 2, characterized in that, the layer of veneer (10) has a varnished (13) surface (11).

4 Ready-for-use veneer sheet material in accordance with claim 1 or 2, characterized by the following characteristics:

a third layer structure (3) and a fourth layer structure (4) are arranged on the first layer structure (1);

the third layer structure (3) contains a second layer of veneer (30) with a top side (31) and an underside (32);

the fourth layer structure (4) contains a second bonding layer (40, 43) which is capable of holding the second layer of veneer (30) together and of bonding it to the first layer structure in such a manner that it can be detached.

5. Ready-for-use veneer sheet material in accordance with one of the claims 1 to 4, characterized in that, the second layer (2) contains a layer of paper (25) which has been saturated with Melamine.

6. Ready-for-use veneer sheet material in accordance with one of the claims 1 to 5, characterized in that, the top layer of veneer (10, 30) consists of individual pieces of veneer which have been joined together according to the kind of marquetry.

7. Method for the production of ready for use veneer sheet material characterized by the following characteristics:

a layer of adhesive (24) is applied to the flat surface of a stiff carrier (5) and a layer of paper (20) is laid flat on top of this layer of adhesive and then another layer of adhesive (23) is applied to the surface of this layer of paper (20), first bonding layer, veneer (10) is laid flat on top of the layer of adhesive;

the same kind of procedure is similarly carried-out with a second bonding layer (40, 43, 44) and a second layer of veneer (30) if necessary; thereby the adhesive is selected so that, on the one hand, the bonding face between the carrier and the layer of paper and, on the other hand, between the veneer and the layer of paper is bigger than the mutual bonding force of the fibers in the layer of paper; the carrier (5) with the bonded layer, or layers, of paper (20, 40) and the layer, or layers, of veneer (10, 20) are held under pressure in a thermal press until the adhesive becomes hard;

the top side (11 or 31) of the layer of veneer (10 or 30) is sanded as well as stained and/or varnished if necessary.

8. The application of the ready-for-use veneer sheet material in accordance with one of the claims 1 to 6 for covering doors, furniture or walls by splitting apart the layer of paper (20) using a wedge-shaped tool (15) and pressing the layer of paper (20a) which has been separated and to which the veneer is bonded, onto a moist layer of adhesive (7) which has previously been applied to the object (6).

9. The application of the ready-for-use veneer sheet material in accordance with claim 4 for the production of marquetry work on the second layer of veneer (30) and for covering doors (6) furniture or walls by means of the following measures:

A piece of veneer is cut out of the second layer of veneer (3) and removed;

another piece of veneer which has the same profile is placed into the resulting gap and glued-in:

this procedure is continued until the intended marquetry work is complete:

now the free surface of the second layer of veneer (3) is sanded;

Splitting open the first layer of paper (20) with a wedge-shaped tool (15) and pressing the split layer of paper (20a) to which the first veneer (10) is bonded, onto a moist layer of adhesive (7) which has been applied to the object (6).

Fig. 1

9

7

6

8

Fig. 2

13    11    10

1

2

26  25    24  22  21  20  23  12

5

Fig. 3

Fig. 4

Fig. 5